# EUROPÄISCHE PATENTSCHRIFT

(11) **EP 3 635 851 B1**
(45) Veröffentlichungstag und Bekanntmachung des Hinweises auf die Patenterteilung: **30.03.2022**
(21) Anmeldenummer: 18739776.5
(22) Anmeldetag: 29.06.2018
(51) Int. Cl.: H02M 1/32, H02M 7/483, H02J 3/36

(54) **STROMRICHTEREINHEIT**
CURRENT CONVERTER UNIT
UNITÉ DE CONVERTISSEUR DE COURANT

(30) Priorität: 28.07.2017 DE 102017213099
(43) Veröffentlichungstag der Anmeldung: 15.04.2020
(73) Patentinhaber: Siemens Energy Global GmbH & Co. KG, 81739 München (DE)
(72) Erfinder: BURKHARDT, Matthias, 91052 Erlangen (DE); ERGIN, Dominik, 91083 Baiersdorf (DE)
(86) Internationale Anmeldenummer: PCT/EP2018/067534
(87) Internationale Veröffentlichungsnummer: WO 2019/020312

(56) Entgegenhaltungen:
- EP-A2- 2 091 123
- WO-A1-2015/172825
- WO-A1-2017/031991
- CN-A- 104 578 130
- GB-A- 2 536 894
- GB-A- 2 537 851
- BUCHER MATTHIAS K ET AL: "Comparison of fault currents in multiterminal HVDC grids with different grounding schemes", 2014 IEEE PES GENERAL MEETING | CONFERENCE & EXPOSITION, IEEE, 27 July 2014 (2014-07-27), pages 1-5, XP032670771, DOI: 10.1109/PESGM.2014.6938990 [retrieved on 2014-10-29]
- STEVEN DE BOECK ET AL: "Configurations and earthing of HVDC grids", 2013 IEEE POWER & ENERGY SOCIETY GENERAL MEETING, 1 January 2013 (2013-01-01), pages 1-5, XP055167145, DOI: 10.1109/PESMG.2013.6672808 ISBN: 978-1-47-991303-9

## Beschreibung

Die Erfindung betrifft eine Stromrichtereinheit für eine Hochspannungsgleichstromübertragung. Diese Stromrichtereinheit weist einen ersten Stromrichter und einen zweiten Stromrichter auf. Weiterhin betrifft die Erfindung ein Verfahren zur Fehlerbehandlung bei einer Stromrichtereinheit.

An Stromrichtern auftretende Fehler können dadurch geklärt werden, dass ein Wechselstrom-Leistungsschalter (welcher einen Wechselspannungsanschluss des Stromrichters mit einem Wechselspannungssystem verbindet) geöffnet wird. Diese Fehlerklärung (Fehlerbehandlung) mittels eines Wechselstrom-Leistungsschalters ist insbesondere auch bei modularen Multi-level-Stromrichtern mit Halbbrücken-Modulen anwendbar.

Problematisch ist dabei allerdings das Auftreten von sogenannten unsymmetrischen Fehlern, insbesondere stromrichterinternen unsymmetrischen Fehlern. Das sind Fehler, die lediglich einen Pol oder zwei Pole der dreipoligen (dreiphasigen) Wechselspannung betreffen. Besonders problematisch ist es, wenn der Wechselstrom-Leistungsschalter mittels eines Transformators mit dem Wechselspannungsanschluss des Stromrichters verbunden ist, der unsymmetrische Fehler auf der Sekundärseite (also auf der dem Stromrichter zugewandten Seite) des Transformators auftritt und der Wechselstrom-Leistungsschalter auf der Primärseite des Transformators (also auf der vom Stromrichter abgewandten Seite des Transformators) angeordnet ist. Derartige unsymmetrische Fehler führen zu einer unsymmetrischen Strombelastung auf der Sekundärseite des Transformators, die auf die Primärseite des Transformators übertragen wird und dazu führt, dass der durch den Wechselstrom-Leistungsschalter fließende Wechselstrom keine Strom-Nulldurchgänge mehr aufweist (fehlende Nulldurchgänge des Wechselstroms). Diese fehlenden Nulldurchgänge des Wechselstroms verhindern nach einer Fehlererkennung ein schnelles Öffnen des Wechselstrom-Leistungsschalters, da beim Öffnen des Wechselstrom-Leistungsschalters auftretende Lichtbögen erst bei Nulldurchgängen des Wechselstroms sicher verlöschen.

Insbesondere bei modularen Multilevel-Stromrichtern mit Halbbrücken-Modulen ist jedoch eine rasche Fehlerklärung erforderlich, da sonst die im Fehlerfall leitenden Freilaufdioden der Halbbrücken-Module thermisch überlastet werden können und neben dem Wechselstrom-Leistungsschalter auch der Stromrichter irreversible Schäden erleiden kann.

Zur Lösung dieses Problems wurde in der Patentanmeldung WO 2011/150963 A1 vorgeschlagen, eine Kurzschließereinheit zu verwenden, die im Falle eines unsymmetrischen Fehlers alle drei Phasen des Wechselspannungsnetzes gegen Erde kurzschließt. Dadurch wird der unsymmetrische Fehler in einen symmetrischen Fehler (das heißt, in einen Fehler, der alle drei Phasen betrifft) umgewandelt, wodurch Nulldurchgänge des Wechselstromes auf der Primärseite des Transformators auftreten.

Weiterhin wurde in der Patentanmeldung WO 2016/055106 A1 vorgeschlagen, im Falle eines unsymmetrischen Fehlers eine Tertiärwicklung des Transformators mittels einer Kurzschließereinheit kurzzuschließen. Dies erfolgt so, dass die drei Phasen der Tertiärwicklung untereinander kurzgeschlossen werden.

Bei den beiden vorstehend genannten Lösungen ist es notwendig, im Fehlerfall Kurzschließer-Schalter zu schließen. Bei der ersten genannten Lösung werden durch den entstehenden Kurzschluss das Wechselspannungsnetz und daran angeschlossene Komponenten stark belastet. Bei der zweiten genannten Lösung wird eine für hohe Leistungen ausgelegte Tertiärwicklung des Transformators benötigt, um die auf der Primärseite des Trafos fließenden Ströme schnell ausreichend beeinflussen zu können. Eine derartige Tertiärwicklung ist aufwendig und teuer.

Aus der Patentanmeldung GB 2 536 894 A ist eine Hochspannungs-Gleichstrom-Übertragungsanlage bekannt, bei der ein Verbindungspunkt zwischen zwei Stromrichtern einer Stromrichtereinheit unmittelbar über eine durch die Erde gebildete Rückleitung mit dem entsprechenden Verbindungspunkt einer zweiten Stromrichtereinheit verbunden ist.

Aus der Offenlegungsschrift CN 104 578 130 A ist eine Stromrichtereinheit bekannt, bei der ein Verbindungspunkt zwischen zwei Stromrichtern der Stromrichtereinheit über einen Schalter mit Erdpotential verbunden ist.

Die internationale Patentanmeldung WO 2015/172825 A1 offenbart einen modularen Multilevel-Stromrichter, bei dem ein Gleichspannungsanschluss mit Erdpotenzial verbunden ist mittels einer Parallelschaltung aus einem Widerstand und einer Spule.

Der Erfindung liegt die Aufgabe zugrunde, eine Stromrichtereinheit und ein Verfahren zur Fehlerbehandlung bei einer Stromrichtereinheit anzugeben, mit denen auch bei Auftreten eines unsymmetrischen Fehlers Stromnulldurchgänge erreicht werden können.

Diese Aufgabe wird erfindungsgemäß gelöst durch eine Stromrichtereinheit und durch ein Verfahren nach den unabhängigen Patentansprüchen. Vorteilhafte Ausführungsformen der Stromrichtereinheit und des Verfahrens sind in den abhängigen Patentansprüchen angegeben.

Offenbart wird eine Stromrichtereinheit für eine Hochspannungsgleichstromübertragung
- mit einem ersten Stromrichter und einem zweiten Stromrichter,
- wobei ein erster Gleichspannungsanschluss des ersten Stromrichters mit einem ersten Leiteranschlusspunkt für einen ersten Hochspannungsgleichstromübertragungs-Leiter (elektrisch) verbunden ist,
- wobei ein zweiter Gleichspannungsanschluss des ersten Stromrichters unter Ausbildung eines Verbindungspunktes mit einem ersten Gleichspannungsanschluss des zweiten Stromrichters verbunden ist,
- wobei ein zweiter Gleichspannungsanschluss des zweiten Stromrichters mit einem zweiten Leiteranschlusspunkt für einen zweiten Hochspannungsgleichstromübertragungs-Leiter verbunden ist,
- wobei der Verbindungspunkt mittels eines stromdämpfenden elektrischen Bauelements mit Erdpotential verbunden ist, und
- der Verbindungspunkt mittels eines Gleichstrom-Schalters mit Erdpotential verbunden ist.

Diese Stromrichtereinheit weist das stromdämpfende elektrische Bauelement auf, das den Verbindungspunkt mit dem Erdpotential verbindet. Das Bauelement weist eine von Null verschiedene elektrische Impedanz auf. Im Unterschied zu einer Stromrichtereinheit, bei der der Verbindungspunkt unmittelbar geerdet ist (das heißt, bei der der Verbindungpunkt mittels eines elektrischen Leiters nahezu impedanzlos mit Erdpotential verbunden ist) ist hier das stromdämpfende elektrische Bauelement zur Verbindung des Verbindungspunktes mit Erdpotential vorgesehen. Dieses Bauelement dämpft bei Auftreten eines unsymmetrischen Fehlers den Fehlerstrom, der vom Erdpotential zu dem Verbindungspunkt fließt. Dadurch wird erreicht, dass die primärseitigen Wechselströme auch bei Auftreten eines unsymmetrischen Fehlers Stromnulldurchgänge aufweisen. Die primärseitigen Wechselströme sind die Wechselströme, die auf der Primärseite eines Transformators fließen, der einen Wechselspannungsanschluss des Stromrichters mit einem Wechselspannungssystem (Wechselspannungsnetz, Energieversorgungsnetz) verbindet. Vorteilhafterweise kann bereits mit einem einfachen stromdämpfenden elektrischen Bauelement erreicht werden, dass im Falle eines unsymmetrischen Fehlers die primärseitigen Wechselströme Nulldurchgänge aufweisen.

Falls jedoch bei der Hochspannungsgleichstromübertragung ein erheblicher Teil des Hochspannungsgleichstroms vom Verbindungspunkt über Erdpotential/Erde zu einer weiteren Stromrichtereinheit fließt (sog. Ground-Return-Betrieb), dann würden an dem stromdämpfenden elektrischen Bauelement erhebliche elektrische Verluste auftreten; das stromdämpfende elektrische Bauelement würde die Hochspannungsgleichstromübertragung erheblich behindern. Deshalb ist der Verbindungspunkt zusätzlich mittels des Gleichstrom-Schalters mit Erdpotential verbunden. Solange kein unsymmetrischer Fehler auftritt, ist der Gleichstrom-Schalter geschlossen. Der Hochspannungsgleichstrom fließt dann unter Umgehung des stromdämpfenden elektrischen Bauelements zum Erdpotential; es treten in dem stromdämpfenden elektrischen Bauelement keine nennenswerten elektrischen Verluste auf. Wenn jedoch ein unsymmetrischer Fehler auftritt, dann wird der Gleichstrom-Schalter geöffnet. Der Strom kommutiert daraufhin von dem Gleichstrom-Schalter in das stromdämpfende elektrische Bauelement. Daraufhin wird der Strom mittels des Bauelements gedämpft und an dem Bauelement eine Spannung aufgebaut. Dadurch wird erreicht, dass ein primärseitiger Wechselstrom Nulldurchgänge aufweist, so dass dieser Wechselstrom mittels eines Wechselstrom-Leistungsschalters abschaltbar ist. Daraufhin wird der Wechselstrom-Leistungsschalter geöffnet und der Wechselstrom abgeschaltet. Damit ist der unsymmetrische Fehler geklärt.

Die Stromrichtereinheit ist so ausgestaltet, dass
- der Gleichstrom-Schalter parallel zu dem Bauelement geschaltet ist. Dadurch überbrückt der Gleichstrom-Schalter im geschlossenen Zustand das stromdämpfende elektrische Bauelement.

Die Stromrichtereinheit kann auch so ausgestaltet sein, dass
- das Bauelement einen Überspannungs-Ableiter aufweist (oder das Bauelement ein Überspannungs-Ableiter ist). Ein Überspannungs-Ableiter weist stromdämpfende elektrische Eigenschaften auf, so dass ein Überspannungs-Ableiter als ein stromdämpfendes elektrisches Bauelement eingesetzt werden kann.

Die Stromrichtereinheit kann auch so ausgestaltet sein, dass
- der Gleichstrom-Schalter ein Gleichstrom-Leistungsschalter ist. Mittels eines solchen Gleichstrom-Leistungsschalters können die bei der HGÜ auftretenden hohen Gleichströme sicher (unter Umgehung des stromdämpfenden elektrischen Bauelements) zum Erdpotential geleitet werden.

Die Stromrichtereinheit kann auch so ausgestaltet sein, dass
- die Verbindung zum Erdpotential mittels einer Erdelektrode hergestellt ist, welche eine Stromtragfähigkeit für den bei der Hochspannungsgleichstromübertragung zu übertragenden Gleichstrom aufweist. Dadurch kann der Gleichstrom sicher in die Erdelektrode umgebendes Erdreich eingeleitet werden. Darüber hinaus kann die Erdelektrode eine Stromtragfähigkeit für einen im Fehlerfall auftretenden Fehlerstrom, insbesondere einen im Fehlerfall auftretenden Kurzschlussstrom, aufweisen.

Die Stromrichtereinheit kann auch so ausgestaltet sein, dass
- der erste Stromrichter und/oder der zweite Stromrichter eine Reihenschaltung aus Modulen aufweisen, wobei die Module jeweils mindestens zwei elektronische Schaltelemente und einen elektrischen Energiespeicher aufweisen. Derartige Module können insbesondere als sogenannte Halbbrücken-Module ausgestaltet sein.

Die Stromrichtereinheit kann auch so ausgestaltet sein, dass
- der erste Stromrichter und/oder der zweite Stromrichter jeweils ein modularer Multilevel-Stromrichter ist. Insbesondere bei einem modularen Multilevel-Stromrichter mit Halbbrücken-Modulen kann das stromdämpfende elektrische Bauelement mit Vorteil eingesetzt werden, um Stromnulldurchgänge im primärseitigen Wechselstrom durch den Wechselspannungsleistungsschalter sicherzustellen.

Offenbart wird weiterhin eine Hochspannungs-Gleichstrom-Übertragungsanlage mit einer Stromrichtereinheit nach einer der vorstehend beschriebenen Varianten.

Offenbart wird weiterhin ein Verfahren zur Fehlerbehandlung bei einer Stromrichtereinheit für eine Hochspannungsgleichstromübertragung
- wobei die Stromrichtereinheit einen ersten Stromrichter und einen zweiten Stromrichter aufweist,
- wobei ein erster Gleichspannungsanschluss des ersten Stromrichters mit einem ersten Leiteranschlusspunkt für einen ersten Hochspannungsgleichstromübertragungs-Leiter (elektrisch) verbunden ist,
- wobei ein zweiter Gleichspannungsanschluss des ersten Stromrichters unter Ausbildung eines Verbindungspunktes mit einem ersten Gleichspannungsanschluss des zweiten Stromrichters verbunden ist,
- wobei ein zweiter Gleichspannungsanschluss des zweiten Stromrichters mit einem zweiten Leiteranschlusspunkt für einen zweiten Hochspannungsgleichstromübertragungs-Leiter verbunden ist,
- wobei der Verbindungspunkt mittels eines stromdämpfenden elektrischen Bauelements mit Erdpotential verbunden ist,
- wobei der Verbindungspunkt mittels eines Gleichstrom-Schalters mit Erdpotential verbunden ist, und
- wobei ein Wechselspannungsanschluss des ersten Stromrichters mit einer Sekundärwicklung eines ersten Transformators verbunden ist, und eine Primärwicklung des ersten Transformators über einen ersten Wechselstrom-Leistungsschalter mit einem Energieversorgungsnetz verbunden ist, wobei bei dem Verfahren
- ein Gleichstrom von dem Verbindungspunkt über den geschlossenen Gleichstrom-Schalter, die Erdelektrode und Erdreich zu einer an der Hochspannungsgleichstromübertragung beteiligten weiteren Stromrichtereinheit fließt,

- auf einen Fehler am Wechselspannungsanschluss des ersten Stromrichters hin, insbesondere auf einen einpoligen oder zweipoligen (stromrichterinternen) Fehler am Wechselspannungsanschluss des ersten Stromrichters hin, der Gleichstrom-Schalter geöffnet wird,
- daraufhin ein den Gleichstrom-Schalter durchfließender Strom von dem Gleichstrom-Schalter in das stromdämpfende elektrische Bauelement kommutiert wird,
- der Strom mittels des Bauelements gedämpft wird und an dem Bauelement eine Spannung aufgebaut wird, wodurch ein die Primärwicklung des ersten Transformators durchfließender Wechselstrom Nulldurchgänge aufweist, so dass dieser Wechselstrom mittels des ersten Wechselstrom-Leistungsschalters abschaltbar ist.

Dieses Verfahren läuft so ab, dass
- daraufhin der erste Wechselstrom-Leistungsschalter geöffnet wird.

Dieses Verfahren kann so ablaufen, dass
- ein Wechselspannungsanschluss des zweiten Stromrichters mit einer Sekundärwicklung eines zweiten Transformators verbunden ist, und eine Primärwicklung des zweiten Transformators über einen zweiten Wechselstrom-Leistungsschalter mit dem Energieversorgungsnetz verbunden ist, wobei bei dem Verfahren
- auf einen Fehler am Wechselspannungsanschluss des ersten Stromrichters oder am Wechselspannungsanschluss des zweiten Stromrichters hin, insbesondere auf einen einpoligen oder zweipoligen (stromrichterinternen) Fehler am Wechselspannungsanschluss des ersten Stromrichters oder am Wechselspannungsanschluss des zweiten Stromrichters hin, der Gleichstrom-Schalter geöffnet wird,
- daraufhin der Strom von dem Gleichstrom-Schalter in das stromdämpfende elektrische Bauelement kommutiert wird,
- der Strom mittels des Bauelements gedämpft wird und an dem Bauelement eine Spannung aufgebaut wird, wodurch ein die Primärwicklung des ersten Transformators oder die Primärwicklung des zweiten Transformators durchfließender Wechselstrom Nulldurchgänge aufweist, so dass dieser Wechselstrom mittels des ersten Wechselstrom-Leistungsschalters oder mittels des zweiten Wechselstrom-Leistungsschalters abschaltbar ist.

Dieses Verfahren kann so ablaufen, dass
- daraufhin der erste Wechselstrom-Leistungsschalter oder der zweite Wechselstrom-Leistungsschalter geöffnet wird.

Das Verfahren weist gleichartige Vorteile auf, wie sie oben in Zusammenhang mit der Stromrichtereinheit dargestellt sind.

Im Folgenden wird die Erfindung anhand von Ausführungsbeispielen näher erläutert. Gleiche Bezugszeichen verweisen dabei auf gleiche oder gleich wirkende Elemente. Dazu ist in
- Figur 1: ein Ausführungsbeispiel eines Stromrichters, der eine Vielzahl von Modulen aufweist, in
- Figur 2: ein Ausführungsbeispiel eines Moduls des Stromrichters, und in
- Figur 3: ein Ausführungsbeispiel einer HochspannungsGleichstrom-Übertragungsanlage mit zwei Stromrichtereinheiten dargestellt.

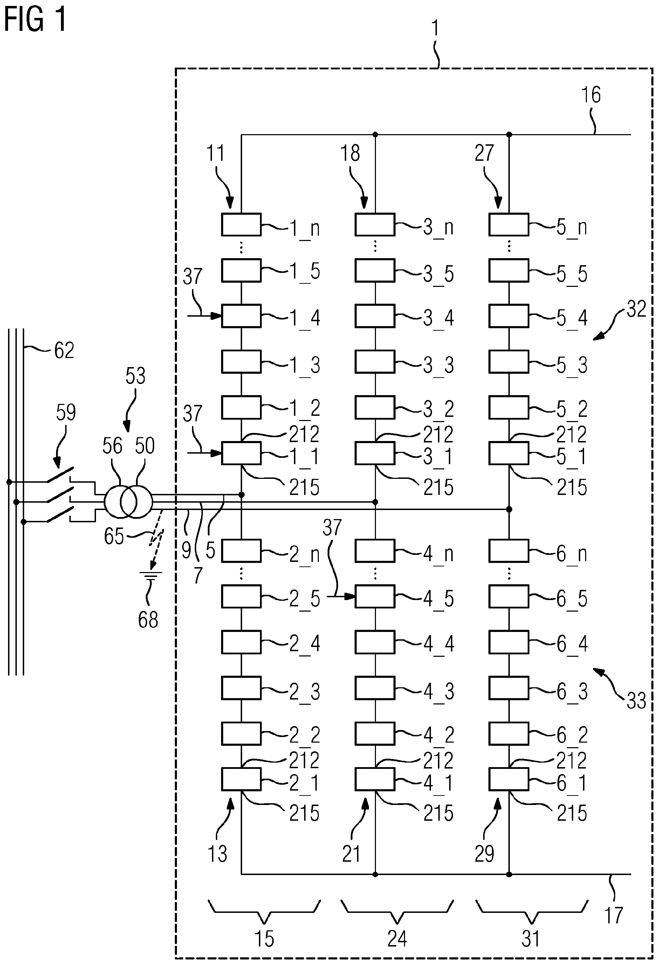

In Figur 1 ist ein Stromrichter 1 in Form eines modularen Multilevel-Stromrichters 1 (modular multilevel converter, MMC) dargestellt. Dieser Multilevel-Stromrichter 1 weist einen ersten Wechselspannungsanschluß 5, einen zweiten Wechselspannungsanschluß 7 und einen dritten Wechselspannungsanschluß 9 auf. Der erste Wechselspannungsanschluß 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 1. Das dem ersten Wechselspannungsanschluss 5 abgewandte Ende des ersten Phasenmodulzweigs 11 ist mit einem ersten Gleichspannungsanschluß 16 elektrisch verbunden; das dem ersten Wechselspannungsanschluß 5 abgewandte Ende des zweiten Phasenmodulzweigs 13 ist mit einem zweiten Gleichspannungsanschluß 17 elektrisch verbunden.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluß 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluß 9 abgewandte Ende des fünften Phasenmodulzweigs 27 sind mit dem ersten Gleichspannungsanschluß 16 elektrisch verbunden. Das dem zweiten Wechselspannungsanschluss 7 abgewandte Ende des vierten Phasenmodulzweigs 21 und das dem dritten Wechselspannungsanschluß 9 abgewandte Ende des sechsten Phasenmodulzweigs 29 sind mit dem zweiten Gleichspannungsanschluss 17 elektrisch verbunden. Der erste Phasenmodulzweig 11, der dritte Phasenmodulzweig 18 und der fünfte Phasenmodulzweig 27 bilden ein Stromrichterteil 32; der zweite Phasenmodulzweig 13, der vierte Phasenmodulzweig 21 und der sechste Phasenmodulzweig 29 bilden ein Stromrichterteil 33.

Jeder Phasenmodulzweig weist eine Mehrzahl von Modulen (1_1, 1_2, 1_3, 1_4 ... 1_n; 2_1 ... 2_n; usw.) auf, welche (mittels ihrer galvanischen Stromanschlüsse) elektrisch in Reihe geschaltet sind. Solche Module werden auch als Submodule bezeichnet. Im Ausführungsbeispiel der Figur 1 weist jeder Phasenmodulzweig n Module auf. Die Anzahl der mittels ihrer galvanischen Stromanschlüsse elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist n = 36: der erste Phasenmodulzweig 11 weist also 36 Module 1_1, 1_2, 1_3, ... 1_36 auf. Die anderen Phasenmodulzweige 13, 18, 21, 27 und 29 sind gleichartig aufgebaut.

Die Module 1_1 bis 6_n werden von einer nicht dargestellten Steuereinrichtung angesteuert. Von dieser zentralen Steuereinrichtung werden optische Nachrichten bzw. optische Signale über eine optische Kommunikationsverbindung 37 (zum Beispiel über einen Lichtwellenleiter) zu den einzelnen Modulen übertragen. Die Nachrichtenübertragung zwischen der Steuereinrichtung und einem Modul ist jeweils symbolhaft durch einen Pfeil 37 dargestellt; die Richtung der Nachrichtenübertragung ist durch die Pfeilspitze symbolisiert. Dies ist am Beispiel der Module 1_1, 1_4 und 4_5 dargestellt; zu den anderen Modulen werden auf die gleiche Art und Weise Nachrichten gesendet. Beispielsweise sendet die Steuereinrichtung an die einzelnen Module jeweils einen Sollwert zur Höhe der Ausgangsspannung, die das jeweilige Modul bereitstellen soll.

Der erste Wechselspannungsanschluss 5, der zweite Wechselspannungsanschluss 7 und der dritte Wechselspannungsanschluss 9 sind mit Sekundärwicklungen 50 eines dreiphasigen Transformators 53 elektrisch verbunden. Primärwicklungen 56 des Transformators 53 sind über einen dreipoligen Wechselstrom-Leistungsschalter 59 mit einem Wechselspannungssystem 62 elektrisch verbunden. Bei dem Wechselspannungssystem 62 kann es sich beispielsweise um ein Wechselspannungsnetz 62 (insbesondere um ein Wechselspannungs-Energieversorgungsnetz) handeln. Die Sekundärwicklungen 50 und die Primärwicklungen 56 können dabei jeweils beliebig verschaltet sein, beispielsweise in Sternschaltung oder in Dreieckschaltung.

Beispielhaft ist in Figur 1 ein einpoliger (einphasiger) Fehler 65 dargestellt, der an dem dritten Wechselspannungsanschluss 9 des Stromrichters 1 auftritt. Dabei handelt es sich im Ausführungsbeispiel um einen Erdschluss 65 der dem dritten Wechselspannungsanschluss 9 zugeordneten Phase der Wechselspannung. Ein derartiger von einer Phase der Wechselspannung des Stromrichters 1 zu Erdpotential 68 auftretender Fehler führt zu einer unsymmetrischen Strombelastung auf der Sekundärseite (also der dem Stromrichter 1 zugewandten Seite) des Transformators, die auf die Primärseite (also die dem Stromrichter 1 abgewandte Seite) des Transformators übertragen wird und dazu führt, dass der durch den Wechselstrom-Leistungsschalter 59 fließende Wechselstrom keine Strom-Nulldurchgänge mehr aufweist. Derartige "fehlende Strom-Nulldurchgänge" des durch den Wechselstrom-Leistungsschalter 59 fließenden Wechselstroms beeinträchtigen (nach Erkennung des Fehlers 65) das schnelle Öffnen des Wechselstrom-Leistungsschalters 59. Die Ursache dafür ist, dass bei fehlenden Nulldurchgängen des Stroms ein Lichtbogen (der beim Öffnen der mechanischen Kontakte des Wechselstrom-Leistungsschalters 59 entsteht) nicht zuverlässig gelöscht wird. Daher ist es wünschenswert, dass der durch den Wechselstrom-Leistungsschalter 59 fließende Strom auch im Falle eines unsymmetrischen Fehlers 65 weiterhin Strom-Nulldurchgänge aufweist. Dies wird durch das stromdämpfende elektrische Bauelement erreicht, wie weiter unten erläutert wird.

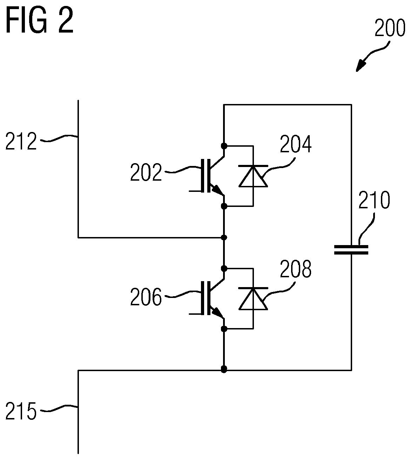

In Figur 2 ist ein Ausführungsbeispiel eines Moduls 200 des Stromrichters 1 dargestellt. Dabei kann es sich beispielsweise um eines der in Figur 1 dargestellten Module 1_1 ... 6_n handeln.

Das Modul 200 ist als ein Halbbrücken-Modul 200 ausgestaltet. Das Modul 200 weist ein erstes (abschaltbares) elektronisches Schaltelement 202 (erstes abschaltbares Halbleiterventil 202) mit einer ersten antiparallel geschalteten Diode 204 auf. Weiterhin weist das Modul 200 ein zweites (abschaltbares) elektronisches Schaltelement 206 (zweites abschaltbares Halbleiterventil 206) mit einer zweiten antiparallel geschalteten Diode 208 sowie einen elektrischen Energiespeicher 210 in Form eines Kondensators 210 auf. Das erste elektronische Schaltelement 202 und das zweite elektronische Schaltelement 206 sind jeweils als ein IGBT (insulated-gate bipolar transistor) ausgestaltet. Das erste elektronische Schaltelement 202 ist elektrisch in Reihe geschaltet mit dem zweiten elektronischen Schaltelement 206. Am Verbindungspunkt zwischen den beiden elektronischen Schaltelementen 202 und 206 ist ein erster galvanischer Modulanschluss 212 angeordnet. An dem Anschluss des zweiten elektronischen Schaltelements 206, welcher dem Verbindungspunkt gegenüberliegt, ist ein zweiter galvanischer Modulanschluss 215 angeordnet. Der zweite Modulanschluss 215 ist weiterhin mit einem ersten Anschluss des Energiespeichers 210 elektrisch verbunden; ein zweiter Anschluss des Energiespeichers 210 ist elektrisch verbunden mit dem Anschluss des ersten elektronischen Schaltelements 202, der dem Verbindungspunkt gegenüberliegt.

Der Energiespeicher 210 ist also elektrisch parallel geschaltet zu der Reihenschaltung aus dem ersten elektronischen Schaltelement 202 und dem zweiten elektronischen Schaltelement 206. Durch entsprechende Ansteuerung des ersten elektronischen Schaltelements 202 und des zweiten elektronischen Schaltelements 206 durch eine (nicht dargestellte) elektronische Steuereinrichtung des Stromrichters kann erreicht werden, dass zwischen dem ersten Modulanschluss 212 und dem zweiten Modulanschluss 215 entweder die Spannung des Energiespeichers 210 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden.

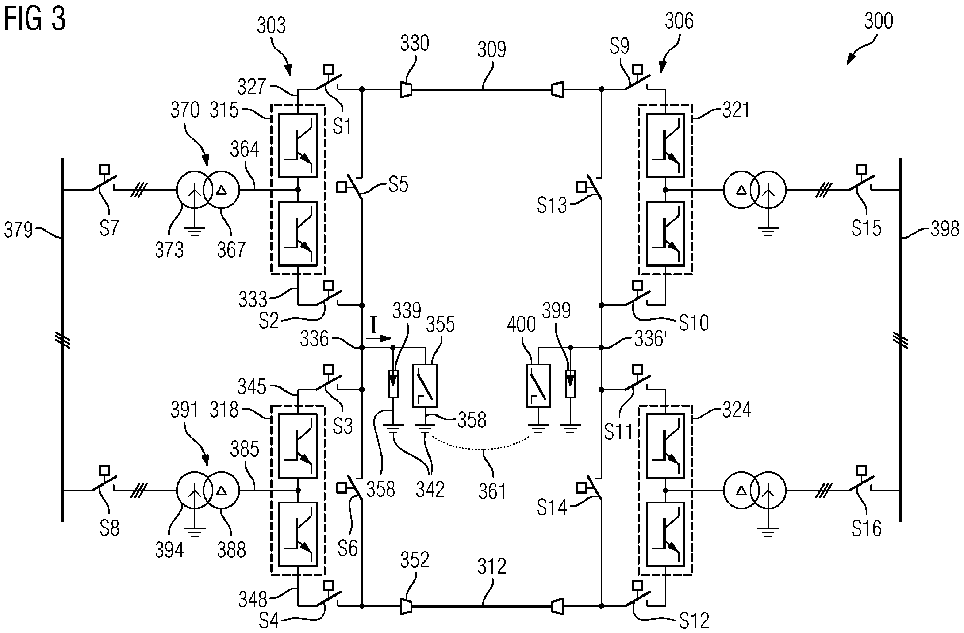

In Figur 3 ist ein Ausführungsbeispiel einer Hochspannungs-Gleichstrom-Übertragungsanlage 300 (HGÜ-Anlage 300) dargestellt. Diese HGÜ-Anlage weist eine erste Stromrichtereinheit 303 und eine zweite Stromrichtereinheit 306 auf. Die erste Stromrichtereinheit 303 und eine zweite Stromrichtereinheit 306 sind mittels eines ersten Hochspannungsgleichstromübertragungs-Leiters 309 (HGÜ-Leiters 309) und mittels eines zweiten HGÜ-Leiters 312 elektrisch miteinander verbunden. Die erste Stromrichtereinheit 303 bildet eine erste Stromrichterstation 303 der HGÜ-Anlage 300; die zweite Stromrichtereinheit 306 bildet eine zweite Stromrichterstation 306 der HGÜ-Anlage 300.

Die erste Stromrichtereinheit 303 weist einen ersten Stromrichter 315 und einen zweiten Stromrichter 318 auf. Die zweite Stromrichtereinheit 306 weist einen ersten Stromrichter 321 und einen zweiten Stromrichter 324 auf. Ein erster Gleichspannungsanschluss 327 des ersten Stromrichters 315 ist mit einem ersten Leiteranschlusspunkt 330 für den ersten Hochspannungsgleichstromübertragung-Leiter 309 elektrisch verbunden. Ein zweiter Gleichspannungsanschluss 333 des ersten Stromrichters 315 ist unter Ausbildung eines Verbindungspunktes 336 mit einem stromdämpfenden elektrischen Bauelement 339 elektrisch verbunden. Das stromdämpfende elektrische Bauelement 339 weist eine elektrische Impedanz ungleich Null auf. Das stromdämpfende elektrische Bauelement 339 verbindet den Verbindungspunkt 336 mit Erdpotential 342. Mit anderen Worten gesagt ist der Verbindungspunkt 336 mittels des stromdämpfenden elektrischen Bauelements 339 mit Erdpotential 342 elektrisch verbunden. Der Verbindungspunkt 336 ist elektrisch mit einem ersten Gleichspannungsanschluss 345 des zweiten Stromrichters 318 verbunden. Ein zweiter Gleichspannungsanschluss 348 des zweiten Stromrichters 318 ist mit einem zweiten Leiteranschlusspunkt 352 für den zweiten Hochspannungsgleichstromübertragung-Leiter 312 elektrisch verbunden.

In der HGÜ-Anlage 300 sind elektrische Schalter S1 bis S16 angeordnet. Mit diesen Schaltern S1 bis S16 können verschiedene Anlagenteile bedarfsweise elektrisch abgetrennt oder überbrückt werden. Mittels dieser Schalter kann also die HGÜ-Anlage 300 konfiguriert werden, indem zum Beispiel einzelne Stromrichter überbrückt werden oder indem einzelne Stromrichter vom Rest der Anlage abgetrennt werden. Der Schalter S7 ist ein erster Wechselstrom-Leistungsschalter S7; der Schalter S8 ist ein zweiter Wechselstrom-Leistungsschalter S8. Der Schalter S15 ist ein dritter Wechselstrom-Leistungsschalter S15 und der Schalter S16 ist ein vierter Wechselstrom-Leistungsschalter S16. Die übrigen Schalter S1-S6 und S9-S14 sind optionale Schalter, d.h. im Allgemeinen funktioniert die HGÜ-Anlage 300 auch ohne diese optionalen Schalter.

Das stromdämpfende elektrische Bauelement 339 ist im Ausführungsbeispiel ein Überspannungs-Ableiter 339. Dieser Überspannungs-Ableiter 339 weist resistive Eigenschaften auf, dadurch wird der durch den Überspannungs-Ableiter 339 fließende Strom gedämpft. Parallel zu dem stromdämpfenden elektrischen Bauelement 339 ist ein Gleichstrom-Schalter 355 geschaltet. Der Verbindungspunkt 336 kann also zusätzlich mittels des Gleichstrom-Schalters 355 mit Erdpotential 342 verbunden sein. Die Verbindung zwischen dem stromdämpfenden elektrischen Bauelement 339 und Erdpotential 342 bzw. zwischen dem Gleichstrom-Schalter 355 und Erdpotential 342 ist mittels mindestens einer Erdelektrode 358 hergestellt. Insbesondere die Erdelektrode 358, die den Gleichstrom-Schalter 355 mit Erdpotential 342 verbindet, weist eine Stromtragfähigkeit für den bei der Hochspannungsgleichstromübertragung zu übertragenden Hochspannungsgleichstrom auf. Dies bedeutet, dass ggf. der gesamte zu übertragende Hochspannungsgleichstrom durch diese Erdelektrode 358 und durch Erdreich zu der weiteren an der Hochspannungsgleichstromübertragung beteiligten Stromrichtereinheit 306 (dauerhaft) fließen kann. Diese Stromübertragung durch Erdreich ist in Figur 3 mittels einer strichlierten Linie 361 dargestellt.

Der Gleichstrom-Schalter 355 kann auf verschiedene Art und Weisen realisiert sein. Vorteilhafterweise ist der Gleichstrom-Schalter 355 als ein leistungselektronischer Gleichstrom-Schalter ausgestaltet. Das heißt, der Gleichstrom-Schalter weist ein leistungselektronisches Schaltelement und einen parallelgeschalteten Energieaufnahmepfad auf. In dem Energieaufnahmepfad kann ein Überspannungs-Ableiter angeordnet sein. Vorteilhafterweise kann der Gleichstrom-Schalter 355 ein schwingkreisloser leistungselektronischer Gleichstrom-Schalter sein.

Ein Wechselspannungsanschluss 364 des ersten Stromrichters 315 ist mit Sekundärwicklungen 367 eines dreiphasigen Transformators 370 elektrisch verbunden. Primärwicklungen 373 des Transformators 370 sind über den dreiphasigen Wechselstrom-Leistungsschalter S7 mit einem ersten Wechselspannungssystem 379 (insbesondere mit einem Wechselspannungsnetz 379) elektrisch verbunden.

In gleicher Art und Weise ist ein Wechselspannungsanschluss 385 des zweiten Stromrichters 318 elektrisch mit Sekundärwicklungen 388 eines zweiten Transformators 391 verbunden. Primärwicklungen 394 des zweiten Transformators 391 sind über einen zweiten Wechselstrom-Leistungsschalter S8 mit dem Wechselspannungssystem 379 verbunden.

Für den durch den Wechselstrom-Leistungsschalter S7 fließenden Wechselstrom wird durch das stromdämpfende elektrische Bauelement 339 sichergestellt, dass auch im Falle eines unsymmetrischen Fehlers Strom-Nulldurchgänge vorhanden sind. Der durch diesen Wechselstrom-Leistungsschalter S7 fließende Wechselstrom bildet also den Strom, der auf der Primärseite des ersten Transformators 370 fließt. Im Normalbetrieb ist der Wechselstrom-Leistungsschalter S7 geschlossen, so dass der Betriebsstrom des Stromrichters durch den Wechselstrom-Leistungsschalter S7 fließt. Bei Erkennen eines Fehlers, insbesondere bei Erkennen eines unsymmetrischen Fehlers, wird der Wechselstrom-Leistungsschalter S7 geöffnet. Dies trifft sinngemäß auch auf den zweiten Wechselstrom-Leistungsschalter S8 zu. Auch für den durch den zweiten Wechselstrom-Leistungsschalter S8 fließenden Wechselstrom wird durch das stromdämpfende elektrische Bauelement 339 sichergestellt, dass im Falle eines unsymmetrischen Fehlers Strom-Nulldurchgänge vorhanden sind.

Die zweite Stromrichtereinheit 306 ist gleichartig zu der ersten Stromrichtereinheit 303 aufgebaut. Der erste Stromrichter 321 und der zweite Stromrichter 324 der zweiten Stromrichtereinheit 306 sind unter Ausbildung eines zweiten Verbindungspunktes 336' elektrisch in Reihe geschaltet. Ebenso ist die zweite Stromrichtereinheit 306 gleichartig über Transformatoren und Wechselstrom-Leistungsschalter mit einem zweiten Wechselspannungssystem 398 (insbesondere mit einem zweiten Wechselspannungsnetz 398) verbunden. Die zweite Stromrichtereinheit 306 kann optional ebenfalls ein zweites stromdämpfendes elektrisches Bauelement 399 mit einem parallel geschalteten zweiten Gleichstrom-Schalter 400 aufweisen. Mittels des zweiten Gleichstrom-Leistungsschalters 400 kann das zweite stromdämpfende elektrische Bauelement 399 überbrückt werden.

Wenn bei der Hochspannungsgleichstromübertragung der sogenannte Ground-Return-Betrieb vorliegt, dann sind die Wechselstrom-Leistungsschalter S7, S8, S15, S16, der erste Gleichstrom-Schalter 355 und der zweite Gleichstrom-Schalter 400 geschlossen. Ein erheblicher Teil des Hochspannungsgleichstroms (oder sogar der vollständige Hochspannungsgleichstrom) fließt von dem ersten Verbindungspunkt 336 der ersten Stromrichtereinheit 303 über den geschlossenen ersten Gleichstrom-Schalter 355, die erste Erdelektrode 358, Erde 361 und den geschlossenen zweiten Gleichstrom-Schalter 400 zu dem zweiten Verbindungspunkt 336' der zweiten Stromrichtereinheit 306. Dieser Strom fließt also unter Umgehung des ersten stromdämpfenden elektrischen Bauelements 339 und unter Umgehung des zweiten stromdämpfenden elektrischen Bauelements 399. Dadurch treten an den stromdämpfenden elektrischen Bauelementen 339, 399 keine wesentlichen elektrischen Verluste auf; die stromdämpfenden elektrischen Bauelemente behindern nicht die Hochspannungsgleichstromübertragung.

Wenn jetzt beispielsweise an dem Wechselspannungsanschluss 364 des ersten Stromrichters 315 ein unsymmetrischer (insbesondere stromrichterinterner) Fehler auftritt, dann kann dies dazu führen, dass mindestens einer der primärseitigen Wechselströme des Transformators 370 keine regelmäßigen Nulldurchgänge mehr aufweist (fehlende Nulldurchgänge des primärseitigen Wechselstroms). Dadurch kann mindestens dieser eine primärseitige Wechselstrom nicht zuverlässig mit dem Wechselstrom-Leistungsschalter S7 abgeschaltet werden. Daher wird bei Auftreten des unsymmetrischen Fehlers der Gleichstrom-Schalter 355 geöffnet. Der den Gleichstrom-Schalter 355 durchfließende Strom kommutiert daraufhin von dem Gleichstrom-Schalter 355 in das stromdämpfende elektrische Bauelement 339. Daraufhin wird dieser Strom mittels des Bauelements 339 gedämpft und an dem Bauelement 339 wird eine Spannung aufgebaut. Dadurch wird erreicht, dass der primärseitige (an dem Transformator 370 auftretende) Wechselstrom Nulldurchgänge aufweist, so dass dieser Wechselstrom mittels des Wechselstrom-Leistungsschalters S7 abschaltbar ist. Daraufhin wird der Wechselstrom-Leistungsschalter S7 geöffnet und der Wechselstrom abgeschaltet. Damit ist der unsymmetrische Fehler geklärt.

Es wurde eine Stromrichtereinheit und ein Verfahren beschrieben, bei denen mittels eines stromdämpfenden elektrischen Bauelements Nulldurchgänge des Wechselstromes an den primärseitigen Wechselspannungsanschlüssen des Transformators sichergestellt sind, auch wenn ein (stromrichterinterner) unsymmetrischer Fehler vorliegt. Mittels des stromdämpfenden elektrischen Bauelements wird (bei Auftreten eines unsymmetrischen Fehlers) eine elektrische Impedanz in den Erdungspfad der Stromrichtereinheit eingebracht. Dabei ist besonders vorteilhaft, dass mittels des stromdämpfenden elektrischen Bauelements unsymmetrische Fehler geklärt werden können, ohne dass Kurzschließer-Schalter an der Primärseite, Sekundärseite oder Tertiärseite des Transformators notwendig sind. Im Vergleich zu einem solchen Kurzschließer-Schalter ist besonders vorteilhaft, dass keine zusätzliche Belastung des Wechselspannungsnetzes (Wechselspannungssystems) auftritt. Weiterhin kann vorteilhafterweise ein üblicher Wechselstrom-Leistungsschalter eingesetzt werden, da Nulldurchgänge des (durch den Wechselstrom-Leistungsschalter fließenden) Stroms sichergestellt sind. Es ist keine neuartige Ansteuerung des Wechselstrom-Leistungsschalters notwendig (herkömmliche Control- und Protection-Software kann eingesetzt werden) und es ist auch sonst keine neuartige Koordination des Wechselstrom-Leistungsschalters notwendig.

Gegenüber einem tertiärseitigen Kurzschließer ergeben sich folgende Vorteile:
- es ist ein kostengünstiges Transformatordesign möglich (es ist keine hochbelastbare Tertiärwicklung notwendig)
- es besteht im Wesentlichen keine Abhängigkeit von Netzparametern
- es sind keine neuartigen Anpassungen der Control- und Protection-Software notwendig, weil ein üblicher Wechselstrom-Leistungsschalter eingesetzt werden kann.

Weiterhin kann die Stromrichtereinheit und das Verfahren vorteilhaft auch beim Ground-Return-Betrieb angewendet werden. Durch die Überbrückung des stromdämpfenden elektrischen Bauelements mittels des Gleichstrom-Schalters treten bei Abwesenheit eines unsymmetrischen Fehlers in dem stromdämpfenden elektrischen Bauelement keine elektrischen Verluste auf. Mit anderen Worten gesagt, fließt im Allgemeinen nur bei Auftreten eines unsymmetrischen Fehlers ein Strom durch das stromdämpfende elektrische Bauelement; dann wird nämlich der Gleichstrom-Schalter geöffnet. Der Gleichstrom-Schalter stellt einen Gleichstromunterbrecher dar, der zwischen der Erdelektrode und dem Verbindungspunkt angeordnet ist.

Vorteilhafterweise ist also insbesondere die Fehlerklärung von stromrichterinternen (konverterinternen) unsymmetrischen Fehlern (zum Beispiel von einpolig zu Erde auftretenden Fehlern) möglich. Die beschriebene Lösung kann besonders vorteilhaft bei bipolaren Voltage-Source-Convertern mit Halbbrücken-Modulen angewendet werden. Insbesondere können die Stromrichtereinheit und das Verfahren bei Bipol-HGÜ-Systemen und bei asymmetrischen Monopol-HGÜ-Systemen angewendet werden.

Die beschriebene Stromrichtereinheit und das beschriebene Verfahren für die HGÜ mit einer Erdelektroden-Anbindung über einen Gleichstrom-Schalter weisen auch folgende Vorteile auf:
- Für Bipol- und Monopolbetrieb existiert über die hochohmige Anbindung mittels des stromdämpfenden elektrischen Bauelements eine ausreichende Strom-Dämpfung, um die Fehlerklärung mit dem Wechselstrom-Leistungsschalter sicherzustellen.
- Nur beim Betrieb über Erdelektroden/Erde ist der Gleichstrom-Schalter im Strompfad angeordnet und ermöglicht eine sichere Fehlerklärung mittels des Wechselstrom-Leistungsschalters.

## Patentansprüche

1. Stromrichtereinheit (303) für eine Hochspannungsgleichstromübertragung
- mit einem ersten Stromrichter (315) und einem zweiten Stromrichter (318),
- wobei ein erster Gleichspannungsanschluss (327) des ersten Stromrichters (315) mit einem ersten Leiteranschlusspunkt (330) für einen ersten Hochspannungsgleichstromübertragungs-Leiter (309) verbindbar ist,
- wobei ein zweiter Gleichspannungsanschluss (333) des ersten Stromrichters (315) unter Ausbildung eines Verbindungspunktes (336) mit einem ersten Gleichspannungsanschluss (345) des zweiten Stromrichters (318) verbunden ist,
- wobei ein zweiter Gleichspannungsanschluss (348) des zweiten Stromrichters (318) mit einem zweiten Leiteranschlusspunkt (352) für einen zweiten Hochspannungsgleichstromübertragungs-Leiter (312) verbindbar ist,
- mit einem Gleichstromschalter (355), wobei der Verbindungspunkt (336) mittels des Gleichstrom-Schalters (355) mit einer Erdelektrode (358)
verbunden ist, und
- mit einem ersten Transformator (370) und einem ersten Wechselstrom-Leistungsschalter (S7), wobei ein Wechselspannungsanschluss (364) des ersten Stromrichters (315) mit einer Sekundärwicklung (367) des ersten Transformators (370) verbunden ist, und eine Primärwicklung (373) des ersten Transformators (370) über den ersten Wechselstrom-Leistungsschalter (S7) mit einem Energieversorgungsnetz (379) verbindbar ist,
**dadurch gekennzeichnet, dass**
- die Stromrichtereinheit (305) ein stromdämpfendes elektrisches Bauelement (339) aufweist, wobei der Verbindungspunkt (336) mittels des stromdämpfenden elektrischen Bauelements (339) mit der Erdelektrode (358) verbunden ist,
- der Gleichstrom-Schalter (355) parallel zu dem Bauelement (339) geschaltet ist,
wobei die Stromrichtereinheit (303) so eingerichtet ist, dass
- auf einen Fehler am Wechselspannungsanschluss (364) des ersten Stromrichters (315) hin, insbesondere auf einen einpoligen oder zweipoligen (stromrichterinternen) Fehler am Wechselspannungsanschluss (364) des ersten Stromrichters (315) hin, der Gleichstrom-Schalter (355) öffnet,
- daraufhin ein den Gleichstrom-Schalter durchfließender Strom von dem Gleichstrom-Schalter (355) in das stromdämpfende elektrische Bauelement (339) kommutiert,
- der Strom mittels des Bauelements (339) gedämpft wird und an dem Bauelement (339) eine Spannung aufgebaut wird, wodurch ein die Primärwicklung (373) des ersten Transformators (370) durchfließender Wechselstrom Nulldurchgänge aufweist, so dass dieser Wechselstrom mittels des ersten Wechselstrom-Leistungsschalters (S7) abschaltbar ist, und
- daraufhin der erste Wechselstrom-Leistungsschalter (S7) öffnet.

2. Stromrichtereinheit nach Anspruch 1,
wobei das Bauelement (339) einen Überspannungs-Ableiter (339) aufweist.

3. Stromrichtereinheit nach einem der vorhergehenden Ansprüche,
wobei der Gleichstrom-Schalter (355) ein Gleichstrom-Leistungsschalter ist.

4. Stromrichtereinheit nach einem der vorhergehenden Ansprüche,
wobei die Erdelektrode (358) eine Stromtragfähigkeit für den bei der Hochspannungsgleichstromübertragung zu übertragenden Gleichstrom und einen im Fehlerfall auftretenden Fehlerstrom, insbesondere einen im Fehlerfall auftretenden Kurzschlussstrom, aufweist.

5. Stromrichtereinheit nach einem der vorhergehenden Ansprüche,
wobei der erste Stromrichter (315) und/oder der zweite Stromrichter (318) eine Reihenschaltung aus Modulen (200) aufweisen, wobei die Module (200) jeweils mindestens zwei elektronische Schaltelemente (202, 206) und einen elektrischen Energiespeicher (210) aufweisen.

6. Stromrichtereinheit nach einem der vorhergehenden Ansprüche,
wobei der erste Stromrichter (315) und/oder der zweite Stromrichter (318) ein modularer Multilevelstromrichter ist.

7. Hochspannungs-Gleichstrom-Übertragungsanlage (300) mit einer Stromrichtereinheit (303) nach einem der Ansprüche 1 bis 6.

8. Verfahren zur Fehlerbehandlung bei einer Stromrichtereinheit (303) für eine Hochspannungsgleichstromübertragung
- wobei die Stromrichtereinheit (303) einen ersten Stromrichter (315) und einen zweiten Stromrichter (318) aufweist,
- wobei ein erster Gleichspannungsanschluss (327) des ersten Stromrichters (315) mit einem ersten Leiteranschlusspunkt (330) für einen ersten Hochspannungsgleichstromübertragungs-Leiter (309) verbunden ist,
- wobei ein zweiter Gleichspannungsanschluss (333) des ersten Stromrichters (315) unter Ausbildung eines Verbindungspunktes (336) mit einem ersten Gleichspannungsanschluss (345) des zweiten Stromrichters (318) verbunden ist,
- wobei ein zweiter Gleichspannungsanschluss (348) des zweiten Stromrichters (318) mit einem zweiten Leiteranschlusspunkt (352) für einen zweiten Hochspannungsgleichstromübertragungs-Leiter (312) verbunden ist,
- wobei die Stromrichtereinheit einen Gleichstromschalter (355), ein stromdämpfendes elektrisches Bauelement (339), einen ersten Transformator (370) und einen ersten Wechselstrom-Leistungsschalter (S7) aufweist, wobei der Verbindungspunkt (336) mittels des stromdämpfenden elektrischen Bauelements (339) mit Erdpotential (342) verbunden ist,
- wobei der Verbindungspunkt (336) mittels des Gleichstrom-Schalters (355) mit Erdpotential (342) verbunden ist, und
- wobei ein Wechselspannungsanschluss (364) des ersten Stromrichters (315) mit einer Sekundärwicklung (367) des ersten Transformators (370) verbunden ist, und eine Primärwicklung (373) des ersten Transformators (370) über den ersten Wechselstrom-Leistungsschalter (S7) mit einem Energieversorgungsnetz (379) verbunden
ist, wobei bei dem Verfahren
- ein Gleichstrom (I) von dem Verbindungspunkt (336) über den geschlossenen Gleichstrom-Schalter (355), die Erdelektrode (358) und Erdreich (361) zu einer an der Hochspannungsgleichstromübertragung beteiligten weiteren Stromrichtereinheit (306) fließt,
- auf einen Fehler am Wechselspannungsanschluss (364) des ersten Stromrichters (315) hin, insbesondere auf einen einpoligen oder zweipoligen (stromrichterinternen) Fehler am Wechselspannungsanschluss (364) des ersten Stromrichters (315) hin, der Gleichstrom-Schalter (355) geöffnet wird,
- daraufhin ein den Gleichstrom-Schalter durchfließender Strom von dem Gleichstrom-Schalter (355) in das stromdämpfende elektrische Bauelement (339) kommutiert wird,
- der Strom mittels des Bauelements (339) gedämpft wird und an dem Bauelement (339) eine Spannung aufgebaut wird, wodurch ein die Primärwicklung (373) des ersten Transformators (370) durchfließender Wechselstrom Nulldurchgänge aufweist, so dass dieser Wechselstrom mittels des ersten Wechselstrom-Leistungsschalters (S7) abschaltbar ist, und
- daraufhin der erste Wechselstrom-Leistungsschalter (S7) geöffnet wird.

9. Verfahren nach Anspruch 8,
wobei die Stromrichtereinheit (303) einen zweiten Transformator (391) aufweist, wobei ein Wechselspannungsanschluss (385) des zweiten Stromrichters (345) mit einer Sekundärwicklung (388) des zweiten Transformators (391) verbunden ist, und eine Primärwicklung (394) des zweiten Transformators (391) über einen zweiten Wechselstrom-Leistungsschalter (S8) mit dem Energieversorgungsnetz (379) verbunden ist, wobei bei
dem Verfahren
- auf einen Fehler am Wechselspannungsanschluss (364) des ersten Stromrichters (315) oder am Wechselspannungsanschluss (385) des zweiten Stromrichters (318) hin, insbesondere auf einen einpoligen oder zweipoligen (stromrichterinternen) Fehler am Wechselspannungsanschluss (364) des ersten Stromrichters (315) oder am Wechselspannungsanschluss (385) des zweiten Stromrichters (318) hin, der Gleichstrom-Schalter (355) geöffnet wird,
- daraufhin ein den Gleichstrom-Schalter (355) durchfließender Strom in das stromdämpfende elektrische Bauelement (339) kommutiert wird,
- der Strom mittels des Bauelements (339) gedämpft wird und an dem Bauelement (339) eine Spannung aufgebaut wird, wodurch ein die Primärwicklung (373) des ersten Transformators (370) oder die Primärwicklung (394) des zweiten Transformators (391) durchfließender Wechselstrom Nulldurchgänge aufweist, so dass dieser Wechselstrom mittels des ersten Wechselstrom-Leistungsschalters (S7) oder mittels des zweiten Wechselstrom-Leistungsschalters (S8) abschaltbar ist.

10. Verfahren nach Anspruch 9,
wobei daraufhin der erste Wechselstrom-Leistungsschalter (S7) oder der zweite Wechselstrom-Leistungsschalter (S8) geöffnet wird.

## Claims

1. Current converter unit (303) for high-voltage direct current transmission
- having a first current converter (315) and a second current converter (318),
- wherein a first DC voltage terminal (327) of the first current converter (315) can be connected to a first conductor terminal point (330) for a first high-voltage direct current transmission conductor (309),
- wherein a second DC voltage terminal (333) of the first current converter (315) is connected to a first DC voltage terminal (345) of the second current converter (318) such that a connection point (336) is formed,
- wherein a second DC voltage terminal (348) of the second current converter (318) can be connected to a second conductor terminal point (352) for a second high-voltage direct current transmission conductor (312),
- having a direct current switch (355), wherein the connection point (336) is connected to a grounding electrode (358) by means of the direct current switch (355), and
- having a first transformer (370) and a first AC power circuit-breaker (S7), wherein an AC voltage terminal (364) of the first current converter (315) is connected to a secondary winding (367) of the first transformer (370), and a primary winding (373) of the first transformer (370) can be connected via the first AC power circuit-breaker (S7) to an energy supply system (379),
**characterized in that**
- the current converter unit (305) has a current-damping electrical component (339), wherein the connection point (336) is connected to the grounding electrode (358) by means of the current-damping electrical component (339),
- the direct current switch (355) is connected in parallel with the component (339),
wherein the current converter unit (303) is set up in such a way that
- in response to a fault at the AC voltage terminal (364) of the first current converter (315), specifically in response to a single-pole or two-pole fault (internally to the current converter) at the AC voltage terminal (364) of the first current converter (315), the direct current switch (355) opens,
- thereafter, a current flowing through the direct current switch commutates from the direct current switch (355) to the current-damping electrical component (339),
- the current is damped by means of the component (339) and a voltage is built up at the component (339), as a result of which an alternating current flowing through the primary winding (373) of the first transformer (370) incorporates zero-crossings, such that said alternating current can be interrupted by means of the first AC power circuit-breaker (S7), and
- thereafter, the first AC power circuit-breaker (S7) opens.

2. Current converter unit according to Claim 1,
wherein the component (339) comprises an overvoltage arrester (339) .

3. Current converter unit according to either of the preceding claims,
wherein the direct current switch (355) is a DC power circuit-breaker.

4. Current converter unit according to one of the preceding claims,
wherein the grounding electrode (358) possesses a current-carrying capability for the direct current which is to be transmitted in high-voltage direct current transmission and for a fault current which occurs in the event of a fault, specifically for a short-circuit current occurring in the event of a fault.

5. Current converter unit according to one of the preceding claims,
wherein the first current converter (315) and/or the second current converter (318) comprise a series circuit of modules (200), wherein each of the modules (200) comprises at least two electronic switching elements (202, 206) and an electrical energy store (210).

6. Current converter unit according to one of the preceding claims,
wherein the first current converter (315) and/or the second current converter (318) is a modular multi-level current converter.

7. High-voltage direct current transmission installation (300) having a current converter unit (303) according to one of Claims 1 to 6.

8. Method for fault management in a current converter unit (303) for high-voltage direct current transmission
- wherein the current converter unit (303) comprises a first current converter (315) and a second current converter (318),
- wherein a first DC voltage terminal (327) of the first current converter (315) is connected to a first conductor terminal point (330) for a first high-voltage direct current transmission conductor (309),
- wherein a second DC voltage terminal (333) of the first current converter (315) is connected to a first DC voltage terminal (345) of the second current converter (318) such that a connection point (336) is formed,
- wherein a second DC voltage terminal (348) of the second current converter (318) is connected to a second conductor terminal point (352) for a second high-voltage direct current transmission conductor (312),
- wherein the current converter unit has a direct current switch (355), a current-damping electrical component (339), a first transformer (370) and a first AC power circuit-breaker (S7), wherein the connection point (336) is connected to ground potential (342) by means of the current-damping electrical component (339),
- wherein the connection point (336) is connected to ground potential (342) by means of the direct current switch (355), and
- wherein an AC voltage terminal (364) of the first current converter (315) is connected to a secondary winding (367) of the first transformer (370), and a primary winding (373) of the first transformer (370) is connected via the first AC power circuit-breaker (S7) to an energy supply system (379), wherein, in the method,
- a direct current (I) flows from the connection point (336) via the closed direct current switch (355), the grounding electrode (358) and the mass of earth (361) to a further current converter unit (306) which participates in high-voltage direct current transmission,
- in response to a fault at the AC voltage terminal (364) of the first current converter (315), specifically in response to a single-pole or two-pole fault (internally to the current converter) at the AC voltage terminal (364) of the first current converter (315), the direct current switch (355) is opened,
- thereafter, a current flowing through the direct current switch is commutated from the direct current switch (355) to the current-damping electrical component (339),
- the current is damped by means of the component (339) and a voltage is built up at the component (339), as a result of which an alternating current flowing through the primary winding (373) of the first transformer (370) incorporates zero-crossings, such that said alternating current can be interrupted by means of the first AC power circuit-breaker (S7), and
- thereafter, the first AC power circuit-breaker (S7) is opened.

9. Method according to Claim 8,
wherein the current converter unit (303) has a second transformer (391), wherein an AC voltage terminal (385) of the second current converter (345) is connected to a secondary winding (388) of the second transformer (391), and a primary winding (394) of the second transformer (391) is connected via a second AC power circuit-breaker (S8) to the energy supply system (379), wherein, in the method,
- in response to a fault at the AC voltage terminal (364) of the first current converter (315) or at the AC voltage terminal (385) of the second current converter (318), specifically in response to a single-pole or two-pole fault (internally to the current converter) at the AC voltage terminal (364) of the first current converter (315) or at the AC voltage terminal (385) of the second current converter (318), the direct current switch (355) is opened,
- thereafter, a current flowing through the direct current switch (355) is commutated to the current-damping electrical component (339),
- the current is damped by means of the component (339) and a voltage is built up at the component (339), as a result of which an alternating current flowing through the primary winding (373) of the first transformer (370) or the primary winding (394) of the second transformer (391) incorporates zero-crossings, such that said alternating current can be interrupted by means of the first AC power circuit-breaker (S7) or by means of the second AC power circuit-breaker (S8).

10. Method according to Claim 9,
wherein, thereafter, the first AC power circuit-breaker (S7) or the second AC power circuit-breaker (S8) is opened.

## Revendications

1. Unité (303) de convertisseur d'un transport de courant continu de haute tension
- comprenant un premier convertisseur (315) et un deuxième convertisseur (318),
- dans laquelle une première borne (327) de tension continue du premier convertisseur (315) peut être connectée à un premier point (330) de connexion d'un premier conducteur (309) de transport de courant continu de haute tension,
- dans laquelle une deuxième borne (333) de tension continue du premier convertisseur (315) est connectée en formant un point (336) de connexion à une première borne (345) de tension continue du deuxième convertisseur (318),
- dans laquelle une deuxième borne (348) de tension continue du deuxième convertisseur (318) peut être connectée à un deuxième point (352) de connexion d'un deuxième conducteur (312) de transport de courant continu de haute tension,
- comprenant un interrupteur (355) de courant continu, dans laquelle le point (336) de connexion est connecté à une électrode (358) de terre au moyen de l'interrupteur (355) de courant continu, et
- comprenant un premier transformateur (370) et un premier interrupteur (S7) de puissance de courant alternatif, dans laquelle une borne (364) de tension alternative du premier convertisseur (315) est connectée à un enroulement (367) secondaire du premier transformateur (370) et à un enroulement (373) primaire du premier transformateur (370) peut être connectée à un réseau (379) d'alimentation en énergie par le premier interrupteur (S7) de puissance du courant alternatif,
**caractérisée en ce que**
- l'unité (305) de convertisseur a un composant (339) électrique d'atténuation du courant, dans laquelle le point (336) de connexion est connecté à l'électrode (358) de terre au moyen du composant (339) électrique d'atténuation du courant,
- l'interrupteur (355) de courant continu est monté en parallèle au composant (339),
dans laquelle l'unité (303) de convertisseur est conçue de manière
- à ouvrir l'interrupteur (355) de courant continu sur un défaut de la borne (364) de tension alternative du premier convertisseur (315), notamment sur un défaut monopolaire ou bipolaire (interne au convertisseur), de la borne (364) de tension alternative du premier convertisseur (315),
- à commuter ensuite un courant passant, dans l'interrupteur de courant continu, de l'interrupteur (355) de courant continu au composant (339) électrique d'atténuation du courant,
- à atténuer le courant au moyen du composant (339) et à établir une tension sur le composant (339) grâce à quoi un courant alternatif passant dans l'enroulement (373) primaire du premier transformateur (370) a des passages par zéro de sorte que ce courant alternatif peut être interrompu au moyen du premier interrupteur (S7) de puissance de courant alternatif, et
- à ouvrir ensuite le premier interrupteur (S7) de puissance de courant alternatif.

2. Unité de convertisseur suivant la revendication 1,
dans laquelle le composant (339) a un parafoudre (339).

3. Unité de convertisseur suivant l'une des revendications précédentes,
dans laquelle l'interrupteur (355) de courant continu est un interrupteur de puissance de courant continu.

4. Unité de convertisseur suivant l'une des revendications précédentes,
dans laquelle l'électrode (358) a une aptitude à porter le courant pour le courant continu à transporter lors du transport du courant continu de haute tension et un courant de défaut se produisant en cas de défaut, notamment un courant de court-circuit se produisant en cas de défaut.

5. Unité de convertisseur suivant l'une des revendications précédentes,
dans laquelle le premier convertisseur (315) et/ou le deuxième convertisseur (318) ont un circuit série de modules (200), dans laquelle les modules (200) ont chacun au moins deux éléments (202, 206) électroniques de coupure et un accumulateur (210) d'énergie électrique.

6. Unité de convertisseur suivant l'une des revendications précédentes,
dans laquelle le premier convertisseur (315) et/ou le deuxième convertisseur (318) est un convertisseur modulaire à plusieurs niveaux.

7. Installation (300) de transport de courant continu et de haute tension comprenant une unité (303) de convertisseur suivant l'une des revendications 1 à 6.

8. Procédé de traitement d'un défaut dans une unité (303) de convertisseur de transport de courant continu de haute tension
- dans lequel l'unité (303) de convertisseur a un premier convertisseur (315) et un deuxième convertisseur (318),
- dans lequel une première borne (327) de tension continue du premier convertisseur (315) est connectée à un premier point (330) de connexion d'un premier conducteur (309) de transport de courant continu de haute tension,
- dans lequel une deuxième borne (333) de tension continue du premier convertisseur (315) est connectée avec formation d'un point (336) de connexion à une première borne (345) de tension continue du deuxième convertisseur (318),
- dans lequel une deuxième borne (348) de tension continue du deuxième convertisseur (318) est connectée à un deuxième point (352) de connexion d'un conducteur (312) de transport de courant continu de haute tension,
- dans lequel l'unité de convertisseur a un interrupteur (355) de courant continu, un composant (339) électrique d'atténuation du courant, un premier transformateur (370) et un premier interrupteur (S7) de puissance de courant alternatif, dans lequel le point (336) de connexion est connecté au potentiel (342) de terre au moyen du composant (339) électrique d'atténuation du courant,
- dans lequel le point (336) de connexion est connecté au potentiel (342) de terre au moyen de l'interrupteur (355) de courant continu, et
- dans lequel une borne (364) de tension alternative du premier convertisseur (315) est connectée à un enroulement (367) secondaire du premier transformateur (370) et un enroulement (373) primaire du premier transformateur (370) est connecté à un réseau (379) d'alimentation en énergie par le premier interrupteur (S7) de puissance de courant alternatif.
dans lequel, dans le procédé
- un courant (I) continu passe du point (336) de connexion, par l'intermédiaire de l'interrupteur (355) de courant continu fermé de l'électrode (358) de terre et de la terre (361), à une autre unité (306) de convertisseur faisant partie du transport de courant continu de haute tension,
- sur un défaut de la borne (364) de tension alternative du premier convertisseur (315), notamment sur un défaut monopolaire ou bipolaire (interne au convertisseur) de la borne (364) de tension alternative du premier convertisseur (315), on ouvre l'interrupteur (355) de courant continu,
- on commute ensuite un courant passant, dans l'interrupteur de courant continu, de l'interrupteur (355) de courant continu au composant (339) électrique d'atténuation du courant,
- on atténue le courant au moyen du composant (339) et on établit une tension sur le composant (339) grâce à quoi un courant alternatif passant dans l'enroulement (373) primaire du premier transformateur (370) a des passages par zéro de sorte que ce courant alternatif peut être interrompu au moyen du premier interrupteur (S7) de puissance de courant alternatif, et
- on ouvre ensuite le premier interrupteur (S7) de puissance de courant alternatif.

9. Procédé suivant la revendication 8,
dans lequel l'unité (303) de convertisseur a un deuxième transformateur (391), dans lequel une borne (385) de tension alternative du deuxième convertisseur (345) est connectée a un enroulement (388) secondaire du deuxième transformateur (391) et un enroulement (394) primaire du deuxième transformateur (391) est connecté au réseau (379) d'alimentation en énergie par un deuxième interrupteur (S8) de puissance de courant alternatif,
procédé dans lequel
- on ouvre l'interrupteur (355) de courant continu sur un défaut de la borne (364) de tension alternative du premier convertisseur (315) ou de la borne (385) de tension alternative du deuxième convertisseur (318), notamment sur un défaut monopolaire ou bipolaire (interne au convertisseur) de la borne (364) de tension alternative du premier convertisseur (315) ou de la borne (385) de tension alternative du deuxième convertisseur (318),
- on commute ensuite un courant passant dans l'interrupteur (355) de courant continu dans le composant (339) électrique d'atténuation du courant,
- on atténue le courant au moyen du composant (339) et on établit sur le composant (339) une tension grâce à quoi un courant alternatif passant dans l'enroulement (373) primaire du premier transformateur (370) ou dans l'enroulement (394) primaire du deuxième transformateur (391), a des passages par zéro, de sorte que ce courant alternatif peut être interrompu au moyen du premier interrupteur (S7) de puissance de courant alternatif, ou au moyen du deuxième interrupteur (S8) de puissance de courant alternatif.

10. Procédé suivant la revendication 9,
dans lequel on ouvre ensuite le premier interrupteur (S7) de puissance de courant alternatif ou le deuxième interrupteur (S8) de puissance de courant alternatif.
